# EUROPEAN PATENT SPECIFICATION

(11) **EP 0 530 514 B1**
(45) Date of publication and mention of the grant of the patent: **03.04.1996**
(21) Application number: 92113203.1
(22) Date of filing: 03.08.1992
(51) Int. Cl.: B60B 33/00, F16M 11/14

(54) **A castor mounting**
Lenkrollenaufbau
Montage de roulette à pivot

(30) Priority: 03.09.1991 IT TO910670
(43) Date of publication of application: 10.03.1993
(73) Proprietor: L.M. Società per Azioni, I-41010 Vaciglio (Modena) (IT)
(72) Inventor: Lancellotti, Adolfo, I-41010 Santa Maria Di Mugnano (Modena) (IT)
(74) Representative: Bosotti, Luciano

(56) References cited:
- DE-A- 2 307 826
- DE-A- 3 220 388
- US-A- 3 231 926
- US-A- 4 364 148
- US-A- 4 749 204
- PATENT ABSTRACTS OF JAPAN vol. 1, no. 51 (M-77)18 May 1977 & JP-A- 52 02 938 (MARUWA ECHO) 11 January 1977

## Description

The present invention relates to a castor mounting.

In particular, the invention relates to a mounting including:
- a first element for fixing to a movable body,
- a second element which is rotatable relative to the first element and has at least one arm for supporting a wheel for rotation about an axis substantially perpendicular to the axis of the rotation between the first and second elements, and
- coupling means between the first and second elements.

There are known mountings of the aforesaid type in which the coupling means between the first and second elements are generally constituted by a pin or a screw which is inserted through the second element and engages a corresponding portion of the first element. These known coupling means require the use of tools in order to assemble the elements of the mounting, which involves a complex and laborious operation because of the restricted spaces in which the tools have to be manoeuvred.

Moreover, elements for enabling rotation, such as bearings, balls, rollers, etc., are normally interposed between the two elements.

A castor mounting is also known from the document GB-A-2154134; in this mounting, the two elements are assembled with the interposition of a resilient split ring for absorbing the axial and radial stresses of the coupling between the two elements. Although this solution considerably reduces the number of components of the mounting, it is difficult to assemble and has problems of reliability under heavy loads.

The object of the present invention is to propose a castor mounting which is constituted by a small number of parts and can be produced easily and cheaply, which is marked by a high degree of practicality during assembly and disassembly operations, and which is reliable in operation even under heavy loading conditions.

This object is achieved by virtue of the fact that the coupling means include a radially-deformable, central, hollow pin which is connected to one of the elements so as to be coaxial with the axis of the rotation between the first and second elements and is adapted to engage a corresponding seat in the other element, and locking means which can be inserted into the hollow pin so as to keep the pin in a radially expanded configuration in which it is coupled with its seat.

By virtue of these characteristics, the castor mounting according to the present invention is constituted by a small number of parts which can be produced particularly easily, to the benefit of production costs. Moreover, the mounting can be assembled very easily and quickly, without the need to use tools, and the assembly operation can easily be automated.

Preferably, both the external surface of the hollow pin and the internal surface of the corresponding seat are substantially spherical. By virtue of this characteristic, as well as interconnecting the two elements of the mounting, the pin can absorb high radial loads, ensuring a low contact pressure between the pin and the seat in spite of the inevitable resilient deformations of the mounting. Reliable operation of the support and low wear of the pin are thus ensured.

Further characteristics and advantages of the present invention will become clear from the detailed description which follows, purely by way of non-limiting example, with reference to the appended drawings, in which:
Figure 1 is a sectioned, partial side elevational view of a mounting according to the present invention, and
Figure 2 is a sectioned plan view of a detail of the mounting, taken on the line II-II of figure 1.

In the drawings, a castor mounting is generally indicated 1.

The mounting 1 includes a flange 2 which, to advantage, may be made of thermoplastics material (for example, polyamide 6) and has a plurality of through-holes 3 so that it can be fixed to a movable body, not shown in the drawings.

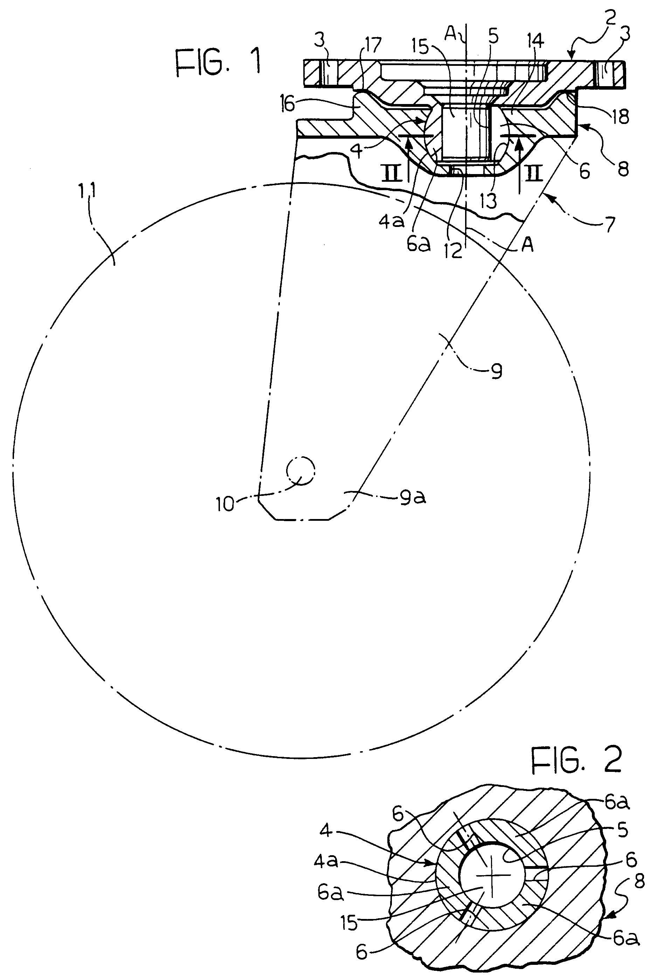

A pin 4 projects from the underside of the flange 2 (with reference to Figure 1) and extends along an axis A which is substantially perpendicular to the flange 2. The pin 4 has a substantially spherical external surface 4a and a longitudinal through-hole 5 which defines a cylindrical cavity. It also has three slots 6 which extend longitudinally for its entire length and radially from its external surface 4a to the wall of the hole 5 so as to define three independent pieces 6a which are connected to the flange 2 so that they can be opened out or moved together resiliently.

Below the flange 2 is a fork-shaped element 7 which, to advantage, is also made of the same material as the flange 2 and has a yoke portion 8 which faces the flange 2 and from which two parallel arms 9 extend, their ends 9a carrying a common pin 10 for the articulation of a wheel 11.

The yoke portion 8 has a through-hole 12 with an enlarged portion which faces the flange 2 and forms a seat 13 of a substantially spherical shape corresponding to that of the external surface 4a of the pin 4.

A narrow end edge 14 of the seat 13 in the yoke portion 8 near the flange 2 constitutes a restriction for preventing the pin 4 from being disengaged from the seat 13 axially.

A cylindrical element 15 is inserted in the hole 5 in the pin 4 and has the function of preventing the individual pieces 6a of the pin 4 from moving resiliently towards each other radially under heavy loads, keeping them coupled firmly with the surface 13.

The element 15 may have a central hole for the insertion of any braking devices of known type.

The yoke portion 8 also has an annular projection 16 which is concentric with the seat 13 and has a flat end edge 17 facing the flange 2 for engaging a corresponding annular surface 18, concentric with the pin 4, on the flange 2. The corresponding surfaces 17 and 18 bear against each other and constitute sliding tracks for the rotary movement of the fork-shaped element 7 relative to the flange 2. By virtue of the type of material used to form the flange 2 and the fork-shaped element 7, it is not necessary to interpose members or lubricants between the elements to facilitate their relative rotation.

The mounting according to the invention is particularly easy to assemble and, consequently, to disassemble, for which the successive assembly steps have to be carried out in reverse. Starting with the three separate main elements of the mounting 1, that is, the flange 2, the fork-shaped element 7 and the cylindrical element 15, one proceeds as follows: firstly, the pin 4 of the flange 2 is engaged in the seat 13 in the element 7 until the flat surfaces 17 and 18 bear against each other. As the pin 4 passes the narrow edge 14, the pieces 6a move radially inwardly and then snap back to their undeformed conditions so that their external surfaces are coupled with the seat 13. The cylindrical element 15 is then engaged in the hollow pin 4, thus keeping the pieces 6a which are coupled with the internal surface of the seat 13 firmly in their opened-out configuration.

This prevents the pin 4 from accidentally being disengaged from the seat 13 axially even when the mounting 1 is operating under particularly onerous conditions whilst, by virtue of the sliding surfaces 17 and 18 and the shapes of the pin 4 and the seat 13, relative rotation can take place between the flange 2 and the element 7 even if the axis of the pin 4 and the axis perpendicular to the yoke portion 8 of the fork-shaped element 7 are slightly misaligned because of the ability of the mounting to yield resiliently under load.

Naturally, the forms of embodiment and details of construction may be varied widely, without thereby departing from the scope of the present invention as defined in the appended claims.

For example, the shape of the external surface of the pin 4 and the corresponding shape of the internal surface of the seat 13 or the number of longitudinal slots in the pin 4 may differ from those described and illustrated in the drawings.

## Claims

1. A castor mounting including:
- a first element (2) for fixing to a movable body,
- a second element (7) which is rotatable relative to the first element (2) and has at least one arm (9) for supporting a wheel (11) for rotation about an axis substantially perpendicular to the axis of the rotation between the first and second elements, and
- coupling means (4, 13, 15) between the first and second elements (2, 7),
characterised in that the coupling means include a radially-deformable, central, hollow pin (4) which is connected to one of the elements (2, 7) so as to be coaxial with the axis of the rotation between the first and second elements and is adapted to engage a corresponding seat (13) in the other element (7, 2), and locking means (15) which can be inserted in the hollow pin (4) so as to keep the pin (4) in a radially expanded configuration in which it is coupled with its seat (13).

2. A mounting according to Claim 1, characterised in that both the external surface (4a) of the hollow pin (4) and the internal surface of the corresponding seat (13) are substantially spherical.

3. A mounting according to Claim 1 or Claim 2, characterised in that the first element is a fixing flange (2), and in that the second element is a fork-shaped element (7) which has a yoke portion (8) facing the flange (2), the hollow pin (4) projecting from the flange (2) for engagement in the corresponding seat (13) in the yoke portion (8) of the fork-shaped element (7).

4. A mounting according to any one of the preceding claims, characterised in that the first and second elements (2, 7) have annular, shaped bearing and sliding surfaces (17, 18) which are concentric with and radially outside the pin (4).

5. A mounting according to Claim 2, characterised in that the hollow pin (4) has longitudinal slots (6) extending from its external surface (4a) to its internal surface (5).

6. A mounting according to Claim 5, characterised in that the pin (4) has a cylindrical internal cavity (5).

7. A mounting according to Claim 6, characterised in that the locking means are constituted by a cylindrical element (15) which is adapted to be inserted in the cylindrical cavity (5).

8. A mounting according to any one of the preceding claims, characterised in that the hollow pin (4) is integral with one of the elements (2, 7).

## Patentansprüche

1. Laufrollenbefestigung, die aufweist:
- ein erstes Element (2) für die Befestigung an einem bewegbaren Körper,
- ein zweites Element (7), das relativ zum ersten Element (2) drehbar ist und zumindest einen Arm (9) besitzt, um ein Rad (11) in einer Achse drehbar zu lagern, die im wesentlichen senkrecht zur Drehachse zwischen dem ersten und zweiten Element liegt,
- eine Kupplungseinrichtung (4, 13 15) zwischen dem ersten und zweiten Element (2, 7),
dadurch gekennzeichnet, daß die Kupplungseinrichtung einen radial verformbaren, mittleren Hohlzapfen (4) aufweist, der mit einem der Elemente (2, 7) so verbunden ist, daß er koaxial zur Drehachse zwischen dem ersten und zweiten Element liegt, wobei er so aufgebaut ist, um in einen entsprechenden Sitz (13) im anderen Element (7, 2) einzugreifen, sowie eine Verriegelungseinrichtung (15) aufweist, die in den Hohlzapfen (4) eingesetzt werden kann, um den Zapfen (4) in einem radial verlängerten Aufbau zu halten, in dem er mit seinem Sitz (13) gekuppelt ist.

2. Befestigung gemäß Anspruch 1, dadurch gekennzeichnet, daß sowohl die Außenfläche (4a) des Hohlzapfens (4) als auch die Innenfläche des entsprechenden Sitzes (13) im wesentlichen kugelförmig ausgebildet sind.

3. Befestigung gemäß Anspruch 1 oder 2, dadurch gekennzeichnet, daß das erste Element ein Befestigungsflansch (2) ist, und daß das zweite Element ein gabelförmiges Element (7) ist, das einen Jochteil (8) besitzt, der dem Flansch (2) gegenüberliegt, wobei der Hohlzapfen (4) vom Flansch (2) vorspringt, um in den entsprechenden Sitz (13) im Jochteil (8) des gabelförmigen Elements (7) einzugreifen.

4. Befestigung gemäß irgendeinem der bisherigen Ansprüche, dadurch gekennzeichnet, daß das erste und zweite Element (2, 7) ringförmige Lager- und Gleitflächen besitzen, die konzentrisch zum Zapfen (4) und radial außerhalb des Zapfens (4) angeordnet sind.

5. Befestigung gemäß Anspruch 2, dadurch gekennzeichnet, daß der Hohlzapfen (4) Längsschlitze (6) besitzt, die von seiner Außenfläche (4a) zu seiner Innenfläche (5) verlaufen.

6. Befestigung gemäß Anspruch 5, dadurch gekennzeichnet, daß der Zapfen (4) einen zylindrischen Innenhohlraum (5) besitzt.

7. Befestigung gemäß Anspruch 6, dadurch gekennzeichnet, daß die Verriegelungseinrichtung von einem zylindrischen Element (15) gebildet wird, das so aufgebaut ist, daß es in den zylindrischen Hohlraum (5) eingesetzt werden kann.

8. Befestigung gemäß irgendeinem der bisherigen Ansprüche, dadurch gekennzeichnet, daß der Hohlzapfen (4) gemeinsam mit einem der Elemente (2, 7) aufgebaut ist.

## Revendications

1. Montage de roulette à pivot comprenant:
- un premier élément (2) devant être fixé à un corps déplaçable,
- un deuxième élément (7) qui peut tourner par rapport au premier élément (2) et présente au moins un bras (9) devant supporter une roue (11) destinée à tourner autour d'un axe sensiblement perpendiculaire à l'axe de rotation entre les premier et deuxième éléments, et
- des moyens de couplage (4, 13, 15) entre les premier et deuxième éléments (2, 7),
caractérisé en ce que les moyens de couplage comprennent une tige creuse (4) centrale, déformable radialement, connectée à l'un des éléments (2, 7) de manière à être coaxiale par rapport à l'axe de rotation entre les premier et deuxième éléments et adaptée pour s'engager contre un siège (13) correspondant situé dans l'autre élément (7, 2) et des moyens de verrouillages (15) qui peuvent être insérés dans la tige creuse (4) de manière à maintenir la tige creuse (4) selon une configuration expansée radialement dans laquelle elle est couplée à son siège (13).

2. Montage selon la revendication 1, caractérisé en ce qu'à la fois la surface externe (4a) de la tige creuse (4) et la surface interne du siège (13) correspondant sont sensiblement sphériques.

3. Montage selon la revendication 1 ou la revendication 2, caractérisé en ce que le premier élément est une bride de fixation (2) et en ce que le deuxième élément est un élément en forme de fourche (7) ayant une partie formant étrier (8) faisant face à la bride (2), la tige creuse (4) faisant saillie de la bride (2) pour s'engager dans le siège (13) correspondant ménagé dans la partie formant étrier (8) de l'élément en forme de fourche (7).

4. Montage selon l'une quelconque des revendications précédentes, caractérisé en ce que les premier et deuxième éléments (2, 7) ont des surfaces porteuses et coulissantes (17, 18) profilées, annulaires, qui sont concentriques par rapport à, et s'étendent radialement vers l'extérieur de, la tige (4).

5. Montage selon la revendication 2, caractérisé en ce que la tige creuse (4) présente des fentes longitudinales (6) s'étendant depuis sa surface extérieure (4a) vers sa surface intérieure (5).

6. Montage selon la revendication 5, caractérisé en ce que la tige (4) présente une cavité intérieure cylindrique (5).

7. Montage selon la revendication 6, caractérisé en ce que les moyens de verrouillage sont constitués d'un élément cylindrique (15) adapté pour être inséré dans la cavité cylindrique (5).

8. Montage selon l'une quelconque des revendications précédentes, caractérisé en ce que la tige creuse (4) est réalisée d'un seul tenant avec l'un des éléments (2, 7).
